# EUROPEAN PATENT APPLICATION

(11) **EP 2 579 657 A1**
(43) Date of publication of application: **10.04.2013**
(21) Application number: 11789692.8
(22) Date of filing: 26.05.2011
(51) Int. Cl.: H04W 64/00, G01S 5/02, G01S 5/14

(54) **POSITIONING DEVICE AND METHOD**

(30) Priority: 03.06.2010 JP 2010127762
(71) Applicant: NTT DOCOMO, Inc., Chiyoda-ku Tokyo 100-6150 (JP)
(72) Inventor: HASHIMOTO, Jun, Tokyo 100-6150 (JP); TAKAHASHI, Makoto, Tokyo 100-6150 (JP); ITAGAKI, Kentaro, Tokyo 100-6150 (JP)
(74) Representative: Maury, Richard Philip
(86) International application number: PCT/JP2011/062123
(87) International publication number: WO 2011/152283

(57) **Abstract**

A positioning device includes a WLAN positioning calculation unit that performs first positioning based on first radio waves from access points; a satellite positioning unit that performs second positioning based on second radio waves from positioning satellites; a positioning result determination unit that determines whether a positioning result by the WLAN positioning calculation unit is to be adopted, when the second positioning by the satellite positioning unit has failed; and an output unit that outputs the positioning result by the WLAN positioning calculation unit, when the positioning result determination unit determines to adopt the positioning result by the WLAN positioning calculation unit.

## Description

### TECHNICAL FIELD

The present invention relates to a positioning device.

### BACKGROUND ART

Location information and content information are integrated with various types of geographic information in real time. The geographic information is utilized in various fields, such as disaster prevention, security, and transportation, by using the mobile communication technology. The utilization of the geographic information is referred to as location based services (LBS). In the LBS, suitable services and contents are provided depending on a location and an environment of a user.

The social infrastructures and major technical issues required for realizing the LSB include high-precision three dimensional space data; a seamless positioning system that can obtain a position in a wide range space including an outdoor environment and an indoor environment; a communication system; a terminal; and displaying technology.

As an example of the seamless positioning system, the positioning by utilizing a wireless local area network (WLAN) can be considered.

Currently, a service has been utilized in general in which positioning is performed by receiving radio waves transmitted from wireless LAN access points installed, for example, in a private home, a corporate office, a cafe, and a station. In a station or in a business district, numerous wireless access points are installed. The positioning service utilizing the wireless LAN is extremely effective as a positioning method in the vicinity of a station or a business district. Especially, it is effective in an underground mall where radio waves from the GPS satellites do not reach.

The portable terminal device performs positioning periodically and/or automatically, and reports the location information to a service provider. The service provider includes a content provider (CP) and a telecommunications carrier. With the base function of the portable terminal device that performs positioning periodically and/or automatically and that reports location information to a service provider, various applications can be realized. For example, services realized by the applications include a push-type delivery service where weather information at the location or event information of the town is delivered by "push," based on the location information of the user. Additionally, services realized by the applications include, for example, an action support service where last train information for the nearest station is reported based on the location information of the user.

### RELATED ART DOCUMENT

### [PATENT DOCUMENT]

Patent document 1: Japanese Patent Laid-Open Application No. 2008-281538

### SUMMARY OF THE INVENTION

### PROBLEM TO BE SOLVED BY THE INVENTION

For positioning with a portable terminal device, the positioning may be performed by an assisted global positioning system (A-GPS). In the assisted GPS scheme, the portable terminal device obtains supplementary information of a location (assist information) such as information regarding positions of satellites or information regarding base stations by using mobile communications networks. The positioning time can be reduced by obtaining the assist information by using the mobile communications networks.

When a request for positioning occurs, the portable terminal device simultaneously performs acquisition of an approximate position with the assist information and WLAN positioning. The acquisition of the approximate position with the assist information and the WLAN positioning can be performed within a few seconds. Further, since both the A-GPS positioning and the WLAN positioning are accompanied by communications with a network, the power consumption can further be reduced by synchronizing the communications with the network. It is preferable that the portable terminal device determine whether the GPS positioning is performed, based on the WLAN positioning result. That is because the WLAN positioning result may be adopted, depending on the WLAN positioning result. If it is possible to adopt the WLAN positioning result, it is not necessary to perform the GPS positioning. Since it is not necessary to perform the GPS positioning, the power consumption can be reduced.

For example, when the portable terminal device determines whether the GPS positioning is to be performed based on the WLAN positioning result and, as a consequence, if the portable terminal device determines that the execution of the GPS positioning is not necessary, the portable terminal device may adopt the WLAN positioning result.

On the other hand, when the portable terminal device determines whether the GPS positioning is to be performed based on the WLAN positioning result, and consequently the portable terminal device determines to perform the GPS positioning, the portable terminal device performs the GPS positioning based on the assist information. When the GPS positioning is successful, the GPS positioning result may be adopted.

However, when it is determined to perform the GPS positioning, the GPS positioning may fail, as a consequence of the GPS positioning being performed based on the assist information. When the GPS positioning has failed, the portable terminal device establishes the connection with the network again, and obtains the assist information. The portable terminal device performs the GPS positioning, based on the assist information that has been obtained again.

When the GPS positioning has failed, as a consequence of the GPS positioning being performed based on the assist information, the network is connected twice, after the request for the positioning has occurred. Since the network is connected twice, the power consumption is increased because of the processes for the connection, and it takes time to perform positioning.

An objective of the present invention is to provide a positioning device and a positioning method that can reduce the positioning time, while reducing the power consumption.

### MEANS FOR SOLVING THE PROBLEM

The positioning device is
a positioning device for measuring a position including
a WLAN positioning calculation unit that performs first positioning based on first radio waves from access points;
a satellite positioning unit that performs second positioning based on second radio waves from satellites;
a positioning result determination unit that determines whether a positioning result by the WLAN positioning calculation unit is adopted, when the second positioning by the satellite positioning unit has failed; and
an output unit that outputs the positioning result by the WLAN positioning calculation unit, when the positioning result determination unit determines to adopt the positioning result by the WLAN positioning calculation unit.

The method is
a method for a positioning device that measures a position, the method including
a WLAN positioning calculation step of performing first positioning based on first radio waves from access points;
a satellite positioning step of performing second positioning based on second radio waves from satellites;
a positioning result determination step of determining whether a positioning result by the WLAN positioning calculation step is to be adopted, when the second positioning by the satellite positioning step has failed; and
an output step of outputting the positioning result by the WLAN positioning calculation step, when the positioning result determination step determines to adopt the positioning result by the WLAN positioning step.

### EFFECT OF THE PRESENT INVENTION

According to the disclosed positioning device and positioning method, the positioning time can be reduced, while reducing the power consumption.

### BRIEF DESCRIPTION OF THE DRAWINGS

FIG. 1 is an explanatory diagram showing an example of a system according to an embodiment;
FIG. 2 is a configuration diagram showing an example of a hardware configuration of the positioning device according to the embodiment;
FIG. 3 is a functional block diagram showing functions of the positioning device according to the embodiment; and
FIG. 4 is a flowchart showing an example of operations of the system according to the embodiment.

### EMBODIMENTS FOR CARRYING OUT THE INVENTION

Next, a configuration for implementing the present invention is explained by the following embodiment, while referring to the figures. Here, in all the figures for illustrating the embodiment, for elements that have the same function, the same reference code is used, and overlapped explanations are omitted.

### <Embodiment>

### <System>

A system is explained to which a positioning device 100 according to the embodiment is applied.

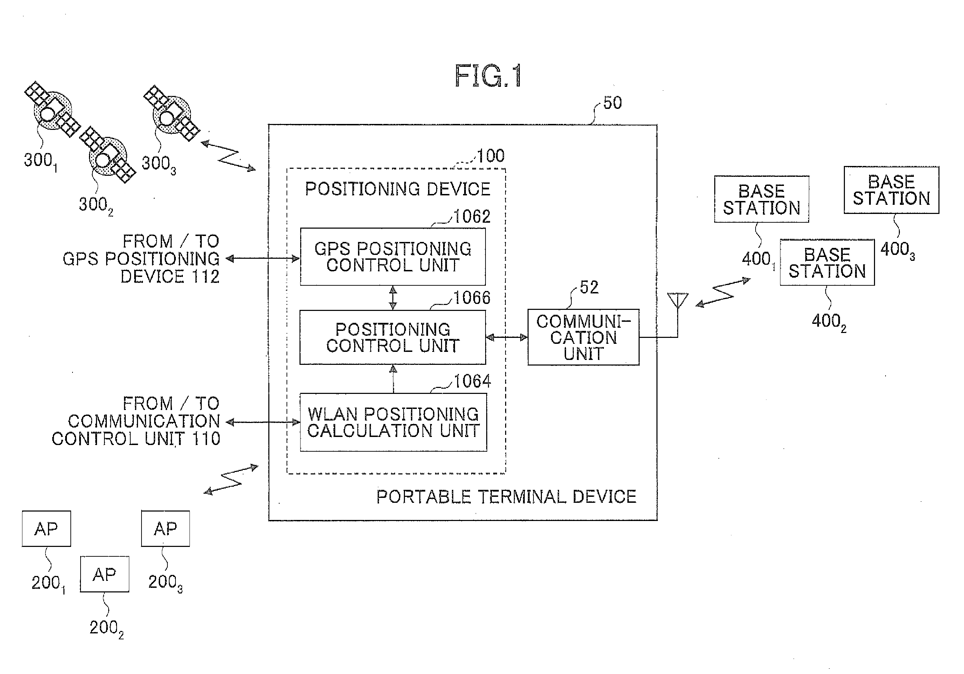

FIG. 1 shows the system to which the positioning device 100 is applied.

The system includes access points 200ₘ (m is an integer such that m > 0). The access points 200ₘ may be scattered. The access points may be called "base units," "base stations," or "stations." The positioning device 100 performs positioning based on distances between the positioning device 100 and the detected access points 200ₘ. FIG. 1 shows, as an example, a case where m = 3. Here, m may be less than or equal to two, or m may be greater than or equal to 4. For example, when m is one or two, an area where the positioning device 100 is assumed to be located can be obtained based on a distance between the access point 200ₘ and the positioning device 100 or distances between the access points 200ₘ and the positioning device 100. Further, the positioning accuracy increases as the value of m increases.

The positioning device 100 may be mounted on a portable terminal device 50, on a personal digital assistant (PDA), or on a personal computer (PC).

When the positioning device 100 is mounted on the portable terminal device 50, even in an indoor environment, the positioning device 100 may obtain location information by performing positioning based on the distances between the positioning device 100 and the access points 200ₘ. Since the location information may be obtained even in the indoor environment, services may be provided based on the location information in the indoor environment.

Additionally, the positioning device 100 performs the positioning of the positioning device 100 based on positioning signals transmitted from GPS satellites 300₁ - 300ₙ (n is an integer such that n >3). The location information may be represented by latitude and longitude. In addition, the location information may be represented by altitude.

For example, the positioning device 100 may perform the positioning based on a stand-alone positioning method. In the stand-alone positioning method, information that may be required for the positioning calculations is obtained by decoding the positioning signals. Currently, approximately thirty GPS satellites are orbiting around the earth at a height of about 20,000 kilometers in the sky. There are six orbital planes, each inclined 55 degrees. In each of the orbital planes, four or more GPS satellites are evenly spaced. Therefore, at least five or more GPS satellites can always be observed anywhere on the earth, provided that the sky is open above that position.

Further, for example, the positioning device 100 may perform the positioning by an assisted GPS (A-GPS) method. In the A-GPS, data that is required for the positioning device 100 to perform the positioning is transmitted from a network. The network may be a mobile communications network, or the Internet. The data may be referred to as assist information. The data includes, for example, area information of a base station or orbital information of the GPS satellite 300ₙ, The area information of the base station includes, for example, approximate location information of the positioning device 100 and information regarding an error in the approximate location information. The information regarding the error in the approximate location information may include a horizontal error. With the data, processes of decoding the positioning information may be omitted. For example, when the data required for performing the positioning is transmitted from the mobile communications network, the positioning device 100 obtains the data that is transmitted from base stations 400₁ (1 is an integer such that 1 > 0). Additionally, for example, when the data required for performing the positioning is transmitted from the Internet, the positioning device 100 obtains the data that is transmitted from the access points 200ₘ.

In the embodiment, the assisted-GPS is mainly used.

### <The positioning device>

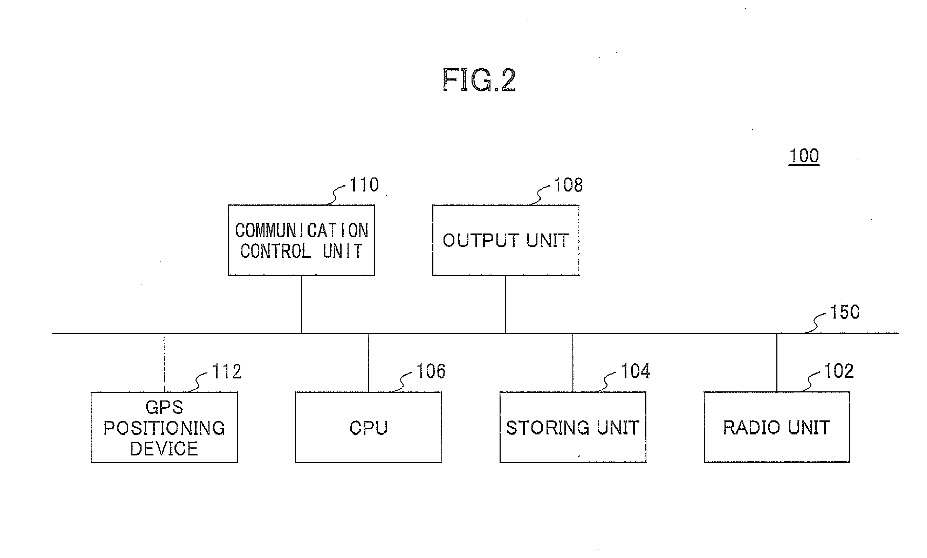

FIG. 2 shows the positioning device 100 according to the embodiment. FIG. 2 mainly shows a hardware configuration.

The positioning device 100 includes a radio unit 102; a storing unit 104; a central processing unit (CPU) 106; an output unit 108; a communication control unit 110; and a GPS positioning device 112. The functional blocks are connected by a bus 150.

The central processing unit 106 performs controls of the radio unit 102, the storing unit 104, the output unit 108, the communication control unit 110, and the GPS positioning device 112. The central processing unit 106 functions in accordance with programs stored in the storing unit 104, and thereby the central processing unit 106 performs predetermined processes.

The radio unit 102 performs wireless communication in a predetermined wireless communication scheme between the radio unit 102 and the access point 200ₘ by the control of the central processing unit 106. The wireless communication scheme includes a wireless LAN. Standards of the wireless LAN include the IEEE 802.11 and the IEEE 802.15. However, the wireless LAN may comply with any of the standards. The radio unit 102 converts information generated by the communication control unit 110 into a wireless signal, and the radio unit 102 transmits the wireless signal. Further, the radio unit 102 converts radio signals from the access points 200ₘ into baseband signals. The radio unit 102 measures a received signal strength indication (or received signal strength indicator (RSSI)) of the radio from the access point 200ₘ.

The storing unit 104 includes applications. Each of the applications is software including functions for performing tasks executed on the positioning device 100. Further, the storing unit 104 stores information regarding the access points, which have been detected in corresponding channels. Further, the storing unit 104 stores an identifier of the access point 200ₘ that can be set in the positioning device 100. The identifier includes a service set ID (SSID) and an extended SSID (ESSID). The identifier is not limited to the service set ID (SSID) or the extended SSID (ESSID), provided that the access point can be identified with the identifier.

The output unit 108 outputs position information calculated by the positioning device 100. For example, the output unit 108 may output the information to a device on which the positioning device 100 is mounted. When the device is a portable terminal device 50, a service can be provided based on the input location information by outputting the information to the device on which the positioning device 100 is mounted. For example, it can be considered to transmit various information items suitable for a user's current position and time.

The communication control unit 110 generates information to be transmitted when the positioning device 100 detects the access point 200ₘ. In addition, the communication control unit 110 analyzes a signal to be received from the detected access point 200ₘ. For example, information to be transmitted during the detection of the access point 200ₘ includes a probe request in a case where an active scan is performed. The probe request may include an identifier of the access point 200ₘ to be detected. The probe request may include information for requesting a response from the access point 200ₘ located in the vicinity of the positioning device 100. Further, for example, when the access point 200ₘ is to be detected, a signal to be transmitted may include a reassociation request for an active scan or for a passive scan.

For example, a signal to be received from the detected access point includes a probe response for performing the active scan. The probe response may include the identifier of the access point 200ₘ that transmits the probe response. Further, for example, the signal to be received from the detected access point 200. includes a beacon in the passive scan. The beacon may include the identifier of the access point 200ₘ that transmits the beacon.

When the active scan is performed, the communication control unit 110 controls the radio unit 102 so that the probe request is transmitted for each channel. Further, when the passive scan is performed, the communication control unit 110 causes the radio unit 102 to scan a frequency band, so that the beacon signals can be detected for the corresponding channels.

The GPS positioning device 112 measures the position of the positioning device 100 in accordance with a control signal (positioning commands) to be input by the central processing unit 106. For example, the GPS positioning device 112 calculates distances (pseudo-distances) from the plural GPS satellites 300₁ - 300ₘ to the GPS positioning device 112 by receiving radio waves from the plural GPS satellites 300₁ - 300ₘ, by the stand-alone positioning method. The GPS positioning device 112 performs the positioning of the positioning device 100 on which the GPS positioning device 112 is mounted, based on the pseudo-distances. The signals emitted by the GPS satellites 300₁ -300ₙ reach the GPS positioning device 112 after the corresponding time periods have been spent for the radio waves to propagate through the distances between the GPS satellites 300₁ - 300ₙ and the GPS positioning device 112. Therefore, if the time periods required for the radio-wave propagations for the corresponding GPS satellites 300₁ - 300ₙ can be obtained, the position of the GPS positioning device 112 can be obtained by the positioning calculation. For example, by the radio waves emitted from the plural GPS satellites 300₁ - 300ₙ, a distance measuring unit of the GPS positioning device 112 measures the distances between the corresponding GPS satellites 300₁ - 300ₙ and the GPS positioning device 112. Then, the position of the GPS positioning device 112 is obtained by a positioning calculation unit, based on the distances obtained by the distance measuring unit.

Further, the GPS positioning device 112 may perform the positioning by the A-GPS method. In the A-GPS method, the data required for the GPS positioning device 112 to perform the positioning is transmitted from the network (not shown). The data includes, for example, the area information of the base station and the orbit information of the GPS satellite 300ₙ. The area information of the base station includes, for example, the approximate location information of the base station 400₁ and the information regarding the error in the approximate location information. The information regarding the error in the approximate location information may include a horizontal error. The positioning result may be represented in terms of the latitude and longitude. Additionally, the position information may be indicated by the altitude. The GPS positioning device 112 inputs the position information to the CPU 106.

### <Functions of the positioning device>

The processes performed by the positioning device 100 include a process of utilizing the assist information held by the positioning device 100 when a positioning request occurs; and a process of performing the WLAN positioning. It is preferable that the process of utilizing the assist information and the process of performing the WLAN positioning be simultaneously started. The positioning request may occur periodically, or irregularly.

Instead of the process of utilizing the assist information held by the positioning device 100, a process of obtaining the assist information may be performed. For example, the positioning device may access the access point 200ₘ, and the assist information may be obtained from a device that is connected to a communications network, to which the access point 200ₘ is connected. The communication network may be the Internet. Further, for example, the positioning device 100 may be connected to the base station 400₁, and the positioning device 100 may obtain the assist information from a device which is connected to the mobile communications network. When the assist information is obtained from the mobile communications network, the mobile terminal device 50 may obtain the access information. Here, the access information is obtained by the mobile terminal device 50 including the positioning device 100 by establishing a connection with the base station 400₁. Additionally, the assist information may be obtained from the base station 400₁.

The process of performing the WLAN positioning includes a process of scanning a frequency band (hereinafter, referred to as the "frequency band scanning process") by the positioning device 100, so as to detect the access point 200ₘ. In the frequency band scanning process, the frequency band is measured. The frequency band scanning process includes a process of searching for the channels. Further, the processes performed by the positioning device 100 include a process of obtaining the position of the positioning device 100 by obtaining the distance between the positioning device 100 and the access point 200ₘ, which has been detected as the result of the frequency band scanning process. For example, the positioning device 100 obtains the position of the access point 200ₘ from the identifier of the access point 200ₘ. The positioning device 100 refers to a local database (DB) included in the positioning device 100. In the local database, the identifiers of the access points are associated with the locations of the access points. The positioning device 100 refers to the local database, and obtains the locations of the access points corresponding to the identifiers of the access points. It is preferable that the local database be updated in accordance with updating of a database on the network. That is for ensuring that the updated locations of the access points are to be obtained. The positioning device 100 estimates the position of the positioning device 100 based on the locations of the access points.

For example, the positioning device 100 may obtain the distance between the positioning device 100 and the access point 200ₘ, based on the location of the access point 200ₘ and reception strength of a radio signal transmitted from the access point 200ₘ. When the location of the access point 200ₘ is required for obtaining the distance, the location of the access point 200ₘ may be obtained from the local database, which is stored in advance in the positioning device 100, or obtained by another method.

For example, the location of the access point 200ₘ may be obtained by the portable terminal device 50 on which the positioning device 100 is mounted. For example, the location of the access point 200ₘ may obtained by the portable terminal device 50 by accessing a server storing the location information of the access point 200ₘ. The portable terminal device 50 may perform wireless communication by a predetermined wireless communication scheme. The wireless communication scheme includes, for example, the Global System for Mobile Communications (GSM), the wideband code division multiple access (WCDMA), and the long term evolution (LTE). Additionally, the location information of the access point may be obtained by the WLAN.

The processes performed by the positioning device 100 may include a process of determining whether the A-GPS positioning is performed depending on a WLAN positioning result. For example, the positioning device 100 may determine whether the A-GPS positioning is to be performed by determining whether a positioning error of the WLAN positioning is less than a predetermined threshold value. The predetermined threshold value may be included in the assist information. For example, when the positioning error of the WLAN positioning result is less than the predetermined threshold value, it can be determined that the A-GPS positioning is not to be performed. When it is determined that the A-GPS positioning is not to be performed, the WLAN positioning result may be adopted. For example, when the positioning error of the WLAN positioning result is not less than the predetermined threshold value, in other words, when the WLAN positioning result exceeds the predetermined threshold value, it may be determined to perform the A-GPS positioning.

The processes performed by the positioning device 100 include a process of determining whether the A-GPS positioning is successful, when the A-GPS positioning is performed. For example, the positioning device 100 performs the A-GPS positioning based on the assist information, and determines whether the positioning result is obtained or not.

The processes performed by the positioning device 100 include a process of adopting the WLAN positioning result, when the positioning result by the A-GPS positioning has not been obtained, but the WLAN positioning result has been obtained.

When another positioning device 100 can only perform positioning by the GPS, and when the other positioning device 100 fails to perform positioning by the A-GPS, the other positioning device 100 is required to establish a connection with a network in order to obtain the assist information. However, with the positioning device 100, both the GPS positioning and the WLAN positioning may be performed. Therefore, both the GPS positioning result and the WLAN positioning result can be obtained. Since it is possible that the WLAN positioning result is held, the WLAN positioning result being held can be utilized, even if the positioning by the A-GPS has failed.

The functional blocks of the positioning device 100 are explained by referring the functional block diagram shown in FIG. 1. The functional blocks shown in FIG. 1 are mainly performed by the central processing unit 106.

When the positioning device 100 is mounted on the portable terminal device 50, the portable terminal device 50 provides suitable services and contents, depending on a location and an environment of a user. The process of providing the suitable services and contents may be performed by software. The portable terminal device 50 includes a communication unit 52. The communication unit 52 is connected to the base station 400₁, and the communication unit 52 obtains the assist information, which is transmitted from a device connected to the motile communications network to which the base station 400₁ is connected. The communication unit 52 inputs the assist information to a positioning control unit 1066.

The positioning device 100 includes a GPS positioning control unit 1062. The GPS positioning control unit 1062 controls the GPS positioning device 112. The GPS positioning control unit 1062 inputs the assist information input by the positioning control unit 1066 to the GPS positioning control device 112. In addition, the GPS positioning control unit 1062 obtains the positioning result by the A-GPS positioning from the GPS positioning device 112. The A-GPS positioning result is input to the positioning control unit 1066.

The positioning device 100 includes a WLAN positioning calculation unit 1064. The WLAN positioning calculation unit 1064 is connected to the communication control unit 110. The WLAN positioning calculation unit 1064 obtains the identifiers of the access points and the reception signal strengths of the access points from the communication control unit 110. The WLAN positioning calculation unit 1064 identifies the position of the positioning device 100 based on the identifiers of the access points and the reception signal strengths of the access points. For example, the WLAN positioning calculation unit 1064 obtains the location information of the access points corresponding to the identifiers of the access points. For example, the WLAN positioning calculation unit 1064 obtains the location information corresponding to the access points input from the communication control unit 110 by referring to a table in which the identifiers of the access points stored in the local database (not shown) are associated with the locations of the access points. The local database may be included in the positioning device 100 or in the portable terminal device 50. the local database stores the identifiers of the access points and the locations of the access points, while associating the identifiers of the access points with the locations of the access points. The WLAN positioning calculation unit 1064 identifies the locations of the access points based on the location information and the reception signal strengths of the access points.

The WLAN positioning calculation unit 1064 may obtain the information regarding the association between the identifiers of the access points and the locations of the access points from a device connected to the network, to which the access point 200ₘ is connected. Further, the WLAN positioning calculation unit 1064 may obtain the information by accessing a server connected to the mobile communication network with the mobile terminal device 50 on which the positioning device 100 is mounted. When the information is obtained by accessing the network, the local database is not always necessary. The network includes the Internet. Additionally, the association between the identifiers of the access points and the locations of the access points may be provided from the base station 400₁.

The positioning device 100 includes the positioning control unit 1066. The positioning control unit 1066 is connected to the GPS positioning control unit 1062, the WLAN positioning calculation unit 1064, and the communication unit 52.

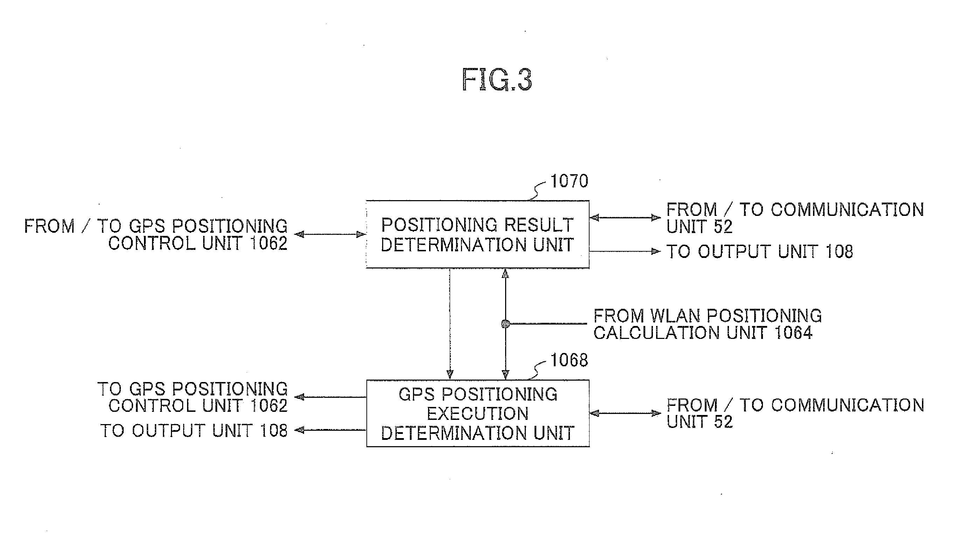

FIG. 3 is a functional block diagram showing functions of the positioning control unit 106.

The positioning control unit 1066 includes a GPS positioning execution determination unit 1068. The GPS positioning execution determination unit 1068 is connected to the GPS positioning control unit 1062, the WLAN positioning calculation unit 1064, the communication unit 52, and the output unit 108. The GPS positioning execution determination unit 1068 determines whether the A-GPS positioning is to be executed based on the assist information input by the communication unit 52 and the WLAN positioning result to be input by the WLAN positioning calculation unit 1064. The assist information may be the assist information held by the positioning device. The assist information may include information regarding a positioning error required for the WLAN positioning result. The positioning error may include a horizontal error. Additionally, the WLAN positioning result may include information regarding the positioning error of the WLAN positioning result together with the WLAN positioning result. The positioning error may include the horizontal error.

The GPS positioning execution determination unit 1068 determines whether the A-GPS positioning is to be executed by determining whether the positioning error of the WLAN positioning result is less than the positioning error required for the WLAN positioning result.

For example, when the positioning error of the WLAN positioning result is less than the positioning error required for the WLAN positioning, it is determined that the positioning by the A-GPS is not to be executed. That is because it is expected that the reliability of the WLAN positioning result is high.

Further, for example, when the positioning error of the WLAN positioning result is not less than the positioning error required for the WLAN positioning result, in other words, when the positioning error of the WLAN positioning result is greater than or equal to the positioning error required for the WLAN positioning result, the GPS positioning execution determination unit 1068 determines to execute the A-GPS positioning. That is because it is expected that the reliability of the WLAN positioning result is low.

When the GPS positioning execution determination unit 1068 determines that the A-GPS positioning is not to be performed, the GPS positioning execution determination unit 1068 inputs the WLAN positioning result to the output unit 108. When the GPS positioning execution determination unit 1068 determines to perform the A-GPS positioning, the GPS positioning execution determination unit 1068 commands the GPS positioning control unit 1062 to execute the positioning.

The positioning control unit 1066 includes a positioning result determination unit 1070. The positioning result determination unit 1070 is connected to the GPS positioning control unit 1062, the WLAN positioning calculation unit 1064, the GPS positioning execution determination unit 1068, the communication unit 52, and the output unit 108. When the A-GPS positioning by the GPS positioning control unit 1062 is successful, the A-GPS positioning result is input to the positioning result determination unit 1070. When the A-GPS positioning by the GPS positioning control unit 1062 is unsuccessful, the A-GPS positioning result is not input to the positioning result determination unit 1070. The information indicating that the A-GPS positioning has failed may be input.

The positioning result determination unit 1070 determines whether the A-GPS positioning result is less than the positioning error required for the A-GPS positioning result, based on the A-GPS positioning result input from the GPS positioning control unit 1062. For example, when the positioning error of the A-GPS positioning result is less than the positioning error of the WLAN positioning result, the positioning result determination unit 1070 determines to adopt the A-GPS positioning result. Further, for example, when the positioning error of the A-GPS positioning result is not less than the positioning error of the WLAN positioning result, in other words, when the positioning error of the A-GPS positioning result is greater than or equal to the positioning error of the WLAN positioning result, the positioning result determination unit 1070 determines not to adopt the A-GPS positioning result. When the A-GPS positioning result is not adopted, the WLAN positioning result may be adopted.

When it is determined to adopt the A-GPS positioning result, the positioning result determination unit 1070 outputs the A-GPS positioning result to the output unit 108. Further, when it is determined not to adopt the A-GPS positioning result, the positioning result determination unit 1070 outputs the WLAN positioning result to the output unit 108.

When the positioning result determination unit 1070 is reported by the GPS positioning control unit 1062 that the positioning by the A-GPS has failed, the positioning result determination unit 1070 determines whether the WLAN positioning result has been obtained from the WLAN positioning calculation unit 1064. When it is determined that the WLAN positioning result has been obtained,-the positioning result determination unit 1070 determines to adopt the WLAN positioning result. When it is determined to adopt the WLAN positioning result, the positioning result determination unit 1070 outputs the WLAN positioning result to the output unit 108.

When it is determined that the WLAN positioning result has not been obtained, the positioning result determination unit 1070 commands the communication unit 52 to obtain the assist information. The positioning result determination unit 1070 commands the communication unit 52 to access the base station 400₁ to obtain the assist information. The positioning result determination unit 1070 obtains information indicating an approximate position of the base station 400₁ from the assist information input by the communication unit 52. The positioning result determination unit 1070 outputs the approximate position as the position of the positioning device 100 to the output unit 108.

In the functional block diagram showing the functions of the positioning control unit 106, which is shown in FIG. 3, the A-GPS positioning may be performed without performing, by the GPS positioning execution determination unit 1068, the determination as to whether the A-GPS positioning is to be performed.

When the determination as to whether the A-GPS positioning is to be performed is not made, the positioning result determination unit 1070 determines whether the A-GPS positioning result is less than the positioning error required for the A-GPS positioning, based on the A-GPS positioning result input by the GPS positioning control unit 1062. For example, when the positioning error of the A-GPS positioning result is less than the positioning error of the WLAN positioning result, the positioning result determination unit 1070 determines to adopt the A-GPS positioning result. Further, for example, when the positioning error of the A-GPS positioning result is not less than the positioning error of the WLAN positioning error, in other words, when the positioning error of the A-GPS positioning result is greater than or equal to the positioning error of the WLAN positioning result, the positioning result determination unit 1070 determines not to adopt the A-GPS positioning result. When the A-GPS positioning result is not adopted, the WLAN positioning result may be adopted. Values that have been obtained by the previous WLAN positioning may be used for the WLAN positioning result and the positioning error of the WLAN positioning result.

When the positioning result determination unit 1070 is informed by the GPS positioning control unit 1062 that the positioning by the A-GPS has failed, the positioning result determination unit 1070 determines whether the WLAN positioning result has been obtained by the WLAN positioning calculation unit 1064. When it is determined that the WLAN positioning result has been obtained, the positioning result determination unit 1070 determines to adopt the WLAN positioning result. When it is determined to adopt the WLAN positioning result, the positioning result determination unit 1070 outputs the WLAN positioning result to the output unit 108.

### <Operations of the positioning device>

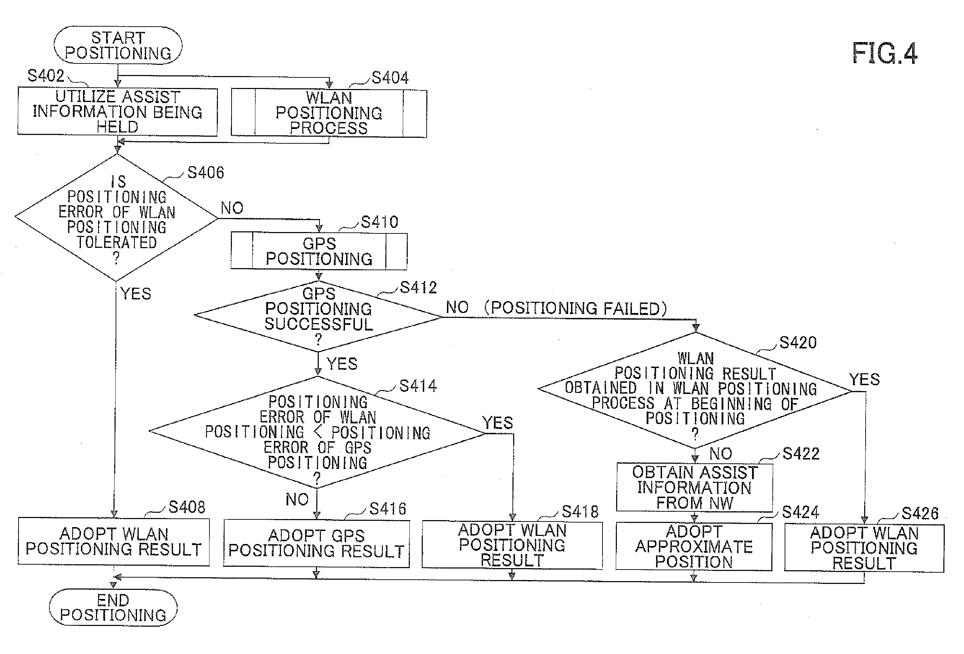

FIG. 4 is a flowchart showing operations of the positioning device 100. FIG. 4 shows an example where the positioning device 100 is mounted on the portable terminal device 50. Further, FIG. 4 shows mainly the processes after a positioning request has occurred.

The positioning device 100 utilizes the assist information held in the positioning device 100 (step S402). For example, the GPS positioning execution determination unit 1068 stores the access information that has been obtained by the communication unit 52 from the base station 400₁.

Further, the positioning device 100 performs the WLAN positioning (step S404). For example, the WLAN positioning calculation unit 1064 performs the WLAN positioning. The WLAN positioning calculation unit 1064 inputs the WLAN positioning result to the GPS positioning execution determination unit 1068.

The positioning device 100 determines whether the A-GPS positioning is to be performed, based on the assist information and the WLAN positioning result (step S406). For example, the GPS positioning execution determination unit 1068 determines whether the positioning by the A-GPS is to be performed, based on the assist information and the WLAN positioning result input by the WLAN positioning calculation unit 1064. For example, the GPS positioning execution determination unit 1068 may determine whether the positioning error of the WLAN positioning result is less than the positioning error required for the WLAN positioning result. The positioning error may be the horizontal error. The positioning error required to the WLAN positioning is included in the assist information.

When it is determined that the A-GPS positioning is not to be performed (step S406: YES), the positioning device 100 adopts the WLAN positioning result (step S40B). For example, the GPS positioning execution determination unit 1068 outputs the WLAN positioning result to the output unit 108. The positioning may be terminated after the WLAN positioning result has been output. The output unit 108 outputs the WLAN positioning result, which is input from the GPS positioning execution determination unit 1068. For example, the WLAN positioning result may be reported to a service provider. The service provider includes a content provider and a telecommunications carrier.

When it is determined that the A-GPS positioning is to be performed (step S406: NO), the positioning device 100 performs the A-GPS positioning (step S410). For example, the GPS positioning execution determination unit 1068 commands the GPS positioning control unit 1062 to perform the A-GPS positioning. During the commanding, the assist information is input. The GPS positioning control unit 1062 commands the GPS positioning device 112 to input the assist information and to perform the positioning, in accordance with the command from the GPS positioning execution determination unit 1068.

The GPS positioning device 112 performs the A-GPS positioning by using the assist information input by the GPS positioning control unit 1062. The result of the A-GPS positioning is input to the GPS positioning control unit 1062. The GPS positioning control unit 1062 inputs the result of the A-GPS positioning to the positioning result determination unit 1070. When the A-GPS positioning has been performed based on the assist information, but the positioning has failed, the GPS positioning device 112 inputs nothing to the GPS positioning control unit 1062. Alternatively, when the A-GPS positioning has been performed based on the assist information, but the positioning has failed, the GPS positioning device 112 may input that the positioning has failed to the GPS positioning control unit 1062. The GPS positioning control unit 1062 detects that the positioning has failed based on that the result of the A-GPS positioning has not been input even after a predetermined time period has been passed, or that the failure of the positioning has been reported. When the GPS positioning control unit 1062 detects that the positioning has failed, the GPS positioning control unit 1062 inputs that the positioning has been failed to the positioning result determination unit 1070.

The positioning device 100 determines whether the GPS positioning has been successful (step S412). For example, when the positioning result has been input from the GPS positioning control unit 1062, the positioning result determination unit 1070 may determine that the positioning has been successful. In addition, when the positioning result determination unit 1070 is reported by the GPS positioning control unit 102 that the positioning has failed, the positioning result determination unit 1070 may determine that the positioning has failed.

When it is determined that the positioning has been successful (step S412: YES), the positioning device 100 determines whether the positioning error of the WLAN positioning result is less than the positioning error of the A-GPS positioning result (step S414). For example, the positioning result determination unit 1070 determines whether the positioning error of the WLAN positioning result input by the WLAN positioning result calculation unit 1064 is less than the positioning error of the GPS positioning result input by the GPS positioning control unit 1062. The positioning error can be the horizontal error.

When it is determined that the positioning error of the WLAN positioning result is not less than the positioning error of the GPS positioning result, in other words, when it is determined that the positioning error of the WLAN positioning result is greater than or equal to the positioning error of the GPS positioning result (step S414: NO), the positioning device adopts the GPS positioning result (step S416). For example, when the positioning result determination unit 1070 determines that the positioning error of the WLAN positioning result is greater than or equal to the positioning error of the GPS positioning result, the positioning result determination unit 1070 outputs the A-GPS positioning result to the output unit 108. The output unit 108 outputs the A-GPS positioning result, which has been input from the positioning result determination unit 1070. For example, the A-GPS positioning result may be reported to a service provider. The service provider may include a content provider and a telecommunications carrier.

When it is determined that the positioning error of the WLAN positioning result is less than the positioning error of the GPS positioning result (step S414: YES), the positioning device adopts the WLAN positioning result (step S418). For example, when the positioning result determination unit 1070 determines that the positioning error of the GPS positioning result is greater than or equal to the positioning error of the WLAN positioning result, the positioning result determination unit 1070 outputs the WLAN positioning result to the output unit 108. The output unit 108 outputs the WLAN positioning result, which is input from the positioning result determination unit 1070. For example, the WLAN positioning result may be reported to the service provider. The service provider may include the content provider and the telecommunications carrier.

On the other hand, when it is determined that the positioning at step S412 has not been successful (step S412: NO), the positioning device 100 determines whether the WLAN positioning result has been obtained (step S420). For example, when the A-GPS positioning result has not been input from the GPS positioning control unit 1062 even after a predetermined time period has been passed, or when information indicating that the A-GPS positioning has failed is input, the positioning result determination unit 1070 determines whether the WLAN positioning result has been input from the WLAN positioning calculation unit 1064.

When it is determined that the WLAN positioning result has not been obtained (step S420: NO), the positioning device 100 obtains the assist information from the network (step S422). For example, the positioning result determination unit 1070 commands the communication unit 52 to obtain the assist information. The communication unit 52 accesses the base station 400₁ and obtains the access information, in accordance with the command from the positioning result determination unit 1070. The positioning result determination unit 1070 obtains the assist information, which has been obtained by the communication unit 52.

The positioning device 100 adopts the approximate position included in the access information (step S424). For example, the positioning result determination unit 1070 obtains the approximate position from the access information. The approximate position may be the area information of the base station 400₁. The positioning result determination unit 1070 inputs the approximate position to the output unit 108. The output unit 108 outputs the approximate position, which has been input from the positioning result determination unit 1070. For example, the approximate position may be reported to the service provider. The service provider may include the content provider and the telecommunications carrier.

On the other hand, when it is determined that the WLAN positioning result has been obtained (step S420: YES), the positioning device 100 adopts the WLAN positioning result (step S426). For example, the positioning result determination unit 1070 adopts the WLAN positioning result input from the WLAN positioning calculation unit 1064. For example, the positioning result determination unit 1070 inputs the WLAN positioning result to the output unit 108. The output unit 108 outputs the WLAN positioning result, which has been input from the positioning result determination unit 1070. For example, the WLAN positioning result may be reported to the service provider. The service provider may include the content provider and the telecommunications carrier.

In the flowchart of FIG. 4 that shows the operations of the positioning device 100, steps S402-S406 and S408 may be omitted. By omitting steps S402-S406 and S408, the positioning device 100 performs the A-GPS positioning without making the determination as to whether the A-GPS positioning is to be performed. At step S414, the positioning error of the WLAN positioning that has been obtained by the previous WLAN positioning may be compared with the positioning error of the GPS positioning. It is preferable that the positioning error of the WLAN positioning that has been obtained by the previous WLAN positioning be the positioning error of the WLAN positioning that has been obtained by the newest WLAN positioning. At step S420, it may be determined as to whether the WLAN positioning result has been obtained.

In the embodiment, instead of the GPS, the European Galileo system, the Russian GLONASS system, or another satellite positioning system may be adopted. In other words, a global navigation satellite system (GNSS) may be adopted.

In the embodiment, the WLAN positioning is applied to the system that performs the A-GPS positioning.

In the embodiment, when the GPS positioning utilizing the assist information has failed, but the WLAN positioning result has been obtained, the WLAN positioning result is adopted. With the positioning device 100, both the GPS positioning and the WLAN positioning can be performed. Therefore, both the GPS positioning result and the WLAN positioning result can be obtained. Even if the positioning by the A-GPS has failed, the WLAN positioning result can be used. Thus, the process of accessing the network to obtain the assist information can be omitted. Since the process of accessing the network can be omitted, the power consumption can be reduced. Further, the traffic load on the network can be reduced.

The positioning device is
a positioning device for measuring a position, and includes
a WLAN positioning calculation unit that performs first positioning based on first radio waves from access points;
a satellite positioning unit that functions as a GPS positioning device and that performs second positioning based on second radio waves from positioning satellites;
a positioning result determination unit that determines whether a positioning result by the WLAN positioning calculation unit is adopted, when the second positioning by the satellite positioning unit has failed; and
an output unit that outputs the determination result by the WLAN positioning calculation unit, when the positioning result determination unit determines to adopt the determination result by the WLAN positioning calculation unit.

When the second positioning by the satellite positioning unit has failed, establishment of network connection can be omitted by adopting the positioning result by the WLAN positioning calculation unit. Since the establishment of the network connection can be omitted, the power consumption can be reduced, and the network traffic load can be reduced.

Further, a satellite positioning execution determination unit that functions as a GPS positioning execution determination unit and that determines whether the second positioning by the satellite positioning unit is to be performed, based on location information to be used during the second positioning by the satellite positioning unit, and based on the positioning result by the WLAN positioning calculation unit, is included, and the positioning result determination unit determines whether the positioning result by the WLAN positioning calculation unit is to be adopted, when the satellite positioning execution determination unit determines to perform the second positioning by the satellite positioning unit, and when the second positioning by the satellite positioning unit has failed.

It can be determined as to whether the WLAN positioning result is to be adopted, by determining whether the second positioning by the satellite positioning unit is executed based on the location information to be used during the second positioning by the satellite positioning unit and the positioning result by the WLAN positioning calculation unit.

Further,
the satellite positioning execution determination unit determines to perform the second positioning by the satellite positioning unit, when a positioning error of the positioning result by the WLAN positioning calculation unit is greater than or equal to a position measuring error that is tolerated for the location information.

Whether the WLAN positioning result is to be adopted can be determined based on the positioning error.

Further,
when the determination result by the WLAN positioning calculation unit is obtained, the positioning result determination unit adopts the WLAN positioning result.

The establishment of the network connection can be omitted by adopting the positioning result by the WLAN positioning calculation unit, when the second positioning by the satellite positioning unit has failed. Since the establishment of the network connection can be omitted, the power consumption can be reduced and the network traffic load can be reduced.

Further,
when the positioning result determination unit determines not to adopt the positioning result by the WLAN positioning calculation unit, the positioning result determination unit obtains the location information that is obtained during the second positioning by the satellite positioning unit, and adopts the location information.

When the second positioning by the satellite positioning unit has failed, and when the positioning result by the WLAN positioning calculation unit may not be adopted, the location information that is obtained during the second positioning by the satellite positioning unit may be obtained, and the location information may be adopted.

The method is
a method for a positioning device that measures a position, the method including
a WLAN positioning calculation step of performing first positioning based on first radio waves from access points;
a satellite positioning step of performing second positioning based on second radio waves from positioning satellites;
a positioning result determination step of determining whether a positioning result by the WLAN positioning calculation step is to be adopted, when the second positioning by the satellite positioning step has failed; and
an output step of outputting the positioning result by the WLAN positioning calculation step, when the positioning result determination step determines to adopt the positioning result by the WLAN positioning calculation step.

For convenience of the explanations, specific numerals have been used in the description in order to facilitate understandings of the present invention. However, these numerals are simply illustrative, and any other appropriate value may be used, except where indicated otherwise.

Although the present invention has been described with reference to specific embodiments, these embodiments are simply illustrative, and various variations, modifications, alterations, substitutions and so on could be conceived by those skilled in the art. For convenience of the explanations, devices according to the embodiments of the present invention have been described by using functional block diagrams, but the devices may be implemented in hardware, software or combinations thereof. The present invention is not limited to the above-described embodiments, and various variations, modifications, alterations, substitutions and so on are included, without departing from the spirit of the present invention.

This international patent application is based on Japanese Priority Application No. 2010-127762 filed on June 3, 2010, the entire contents of which are hereby incorporated by reference.

### LIST OF REFERENCE SYMBOLS

50: Mobile terminal device
52: Communication unit
100: Positioning device
102: Radio unit
104: Storing unit
106: Central processing unit (CPU)
1062: GPS positioning control unit
1064: WLAN positioning calculation unit
1066: Positioning control unit
1068: GPS positioning execution determination unit
1070: Positioning result determination unit
108: Output unit
110: Communication control unit
112: GPS positioning device
200₁ - 200ₘ (m is an integer such that m > 0): Access points
300₁ - 300ₙ (n is an integer such that n > 3): GPS satellites
400 - 300₁ (1 is an integer such that 1 > 0): Base stations

## Claims

1. A positioning device for measuring a position comprising:
a WLAN positioning calculation unit that performs first positioning based on first radio waves from access points;
a satellite positioning unit that performs second positioning based on second radio waves from positioning satellites;
a positioning result determination unit that determines whether a positioning result by the WLAN positioning calculation unit is to be adopted, when the second positioning by the satellite positioning unit has failed; and
an output unit that outputs the determination result by the WLAN positioning calculation unit, when the positioning result determination unit determines to adopt the determination result by the WLAN positioning calculation unit.

2. The positioning device according to claim 1, further comprising:
a satellite positioning execution determination unit that determines whether the second positioning by the satellite positioning unit is to be performed, based on location information to be used during the second positioning by the satellite positioning unit, and based on the positioning result by the WLAN positioning calculation unit,
wherein, when the satellite positioning execution determination unit determines to perform the second positioning by the satellite positioning unit, and when the second positioning by the satellite positioning unit has failed, the positioning result determination unit determines whether the positioning result by the WLAN positioning calculation unit is to be adopted.

3. The positioning device according to claim 2,
wherein, when a positioning error of the positioning result by the WLAN positioning calculation unit is greater than or equal to a position measuring error that is tolerated for the location information, the satellite positioning execution determination unit determines to perform the second positioning by the satellite positioning unit.

4. The positioning device according to claim 1,
wherein, when the determination result by the WLAN positioning calculation unit has been obtained, the positioning result determination unit determines to adopt the WLAN positioning result.

5. The positioning device according to claim 1,
wherein, when the positioning result determination unit determines not to adopt the positioning result by the WLAN positioning calculation unit, the positioning result determination unit obtains the location information that is obtained during the second positioning by the satellite positioning unit, and the positioning result determination unit adopts the location information.

6. A method of a positioning device that performs positioning, the method comprising:
a WLAN positioning calculation step of performing first positioning based on first radio waves from access points;
a satellite positioning step of performing second positioning based on second radio waves from positioning satellites;
a positioning result determination step of determining whether a positioning result by the WLAN positioning calculation step is to be adopted, when the second positioning by the satellite positioning step has failed; and
an output step of outputting the positioning result by the WLAN positioning calculation step, when the positioning result determination step determines to adopt the positioning result by the WLAN positioning calculation step.
